(19) Europäisches Patentamt
European Patent Office
Office européen des brevets

(11) **EP 3 474 593 B1**

(12) **EUROPEAN PATENT SPECIFICATION**

(45) Date of publication and mention
of the grant of the patent:
**11.08.2021 Bulletin 2021/32**

(21) Application number: **16905795.7**

(22) Date of filing: **21.06.2016**

(51) Int Cl.:
***H04W 36/00*** *(2009.01)* *H04W 72/12* *(2009.01)*

(86) International application number:
**PCT/CN2016/086603**

(87) International publication number:
**WO 2017/219253 (28.12.2017 Gazette 2017/52)**

(54) **EFFICIENT RANDOM ACCESS**

EFFIZIENTER DIREKTZUGRIFF

ACCÈS ALÉATOIRE EFFICACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2019 Bulletin 2019/17**

(73) Proprietor: **Huawei Technologies Co., Ltd.
Longgang District
Shenzhen, Guangdong 518129 (CN)**

(72) Inventors:
• **ZHANG, Lili**
**Shenzhen**
**Guangdong 518129 (CN)**
• **TENNY, Nathan Edward**
**Shenzhen**
**Guangdong 518129 (CN)**
• **STIRLING-GALLACHER, Richard**
**Shenzhen**
**Guangdong 518129 (CN)**
• **LI, Guorong**
**Shenzhen**
**Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**EP-A1- 2 448 329         CN-A- 101 616 443
CN-A- 102 271 418         US-A1- 2012 327 856
US-A1- 2015 305 065**

• **QUALCOMM INCORPORATED: "Further details
of RACH-less handover", 3GPP DRAFT;
R2-164239_RACHLESS_HANDOVER, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG2, no. Nanjing,
China; 20160523 - 20160527 22 May 2016
(2016-05-22), XP051105517, Retrieved from the
Internet:
URL:http://www.3gpp.org/ftp/Meetings_3GPP_
SYNC/RAN2/Docs/ [retrieved on 2016-05-22]**

**Description**

**TECHNICAL FIELD**

The present invention relates to the communications field, and in particular, to an access method, a device, and a system.

**BACKGROUND**

Currently, in a Long Term Evolution (English full name: Long Term Evolution, LTE for short) technology system, a random access (English full name: Random access, RA for short) process is implemented by user equipment (English full name: User Equipment, UE for short) by sending a pilot signal (English: Preamble) on a physical random access channel (English full name: Physical Random Access Channel, PRACH for short). The RA process mainly includes accessing a network by the UE and synchronizing uplink sending timing of the UE.

In uplink (English full name: Up Link, UL for short) transmission in the current LTE system, a propagation delay and a multipath effect cause UL transmission misalignment of a plurality of UEs, and consequently serious inter-carrier interference (English full name: Inter-Carrier Interference, ICI for short) and intersymbol interference (English full name: Inter-Symbol Interference, ISI for short) are caused after discrete Fourier transform (English full name: Discrete Fourier Transform, DFT for short) detection is performed on an evolved NodeB (English full name: Enhanced Node Basestation, eNB for short) side. Therefore, the RA process is defined in LTE to estimate a timing difference of each UE, and a sending time is adjusted in an initial access phase. For example, a random access response (English full name: RA Request, RAR for short) message includes a timing advance (English full name: Timing Advance, TA for short) command of an 11-bit length, and an eNB may be allowed to perform compensation in a cell within a 100-kilometer cell radius.

However, a significant feature of an ultra dense network (English full name: Ultra Dense Network, UDN for short) network is that a cell radius is very small and a channel delay is shorter. Therefore, a UL timing difference is reduced on the premise of downlink (English full name: Down Link, DL for short) synchronization. For example, only a 1.3-microsecond round-trip propagation delay is generated within a 200-meter cell radius, and is much shorter than a length of a 4.7-microsecond cyclic prefix (English full name: Cyclic Prefix, CP for short) in LTE. When UL synchronization is not performed, if the CP is sufficient to resolve a problem of the UL timing difference, UL synchronization is unnecessary in a UDN scenario.

From a perspective of avoiding interference, UL synchronization is not as necessary in the UDN network as in a macro LTE system. To be specific, when UE downlink synchronization is implemented, the UE may perform UL transmission at any moment.

A main function of the RA process is to perform UL synchronization, and UL synchronization can be avoided in the UDN network. Therefore, the RA process may be simplified in the UDN network and system efficiency is improved. In the prior art, the following documents relates to the technological background of the present invention.

EP 2 448 329 A1 dicloses that before a handover, a target cell sends a TA of the target cell to a UE through a source cell. Thereafter, the target cell sends a UL Grant of the target cell to the UE. Then, the target cell receives a handover complete message that is sent by the UE with the TA on a resource that is corresponding to the UL Grant.

US 2015/305065 A1 discloses a case of a UE moving from a serving cell to a target cell using in a handover procedure. If the target cell is small enough, the UE does not need to get a timing advance for the target cell and thus the handover process can be simplified as compared to conventional practice. Specifically, the serving cell can include in its handover command to the UE an uplink grant, which the serving cell coordinates withthe target cell. The UE then simply transmits a RRC connection reconfiguration complete message to the target cell on that allocated uplink resource.

The standard change proposal QUALCOMM INCORPORATED: "Further details of RACH-less handover SGPP DRAFT, R2-164239_RACHLESS_HANDOVER, SRD GENERATION PARTNERSHIP PROJECT (SGPP), MOBILE COMPETENCE CENTRE J 650, ROUTE DES LUCIOLES J F-06921 SOPHIA-ANTIPOLIS CEDEX J FRANCE J / vol. RAN WG2, no. Nanjing, China, 20160523 - 20160527 22 May 2016 (2016-05-22) deals with RACH-less handover and highlights that the calculation of TA for a target eNB is a core issue.

**SUMMARY**

The present invention provides an access method according to claim 1 and claim 7 to simplify an RA process and improve system efficiency. Further advantageous embodiments and improvements of the invention are listed in the dependent claims. Hereinafter, aspects of the invention which contribute to the understanding of the invention are discussed. However, it should be noted that the invention is defined by the attached claims and any examples and embodiments which are not covered by these claims should also be understood merely as aspects of the invention contributing to the understanding of the invention.

To resolve the foregoing technical problem, a first aspect provides an access method, including: sending, by a base station in a target cell, first information to UE, where the first information is an uplink grant UL grant message, so that the UE sends information on an uplink UL based on the first information.

For example, in a first possible implementation, the base station is a first base station of a to-be-accessed cell; or the base station is a first base station used as a target base station, or the base station is a second base station used as a source base station, where the target base station is at least one of a base station after handover and a base station after dual-link or multilink link addition or switch, and the source base station is at least one of a base station before handover and a base station before dual-link or multilink link addition or switch.

Specifically, if the UE sends the information on the uplink UL based on the first information, the first base station receives the information that is sent by the UE on the UL based on the first information.

This aspect of the present invention can be applied to scenarios such as UE access, base station handover, and dual-link or multilink base station addition or switch. Dual-link is also referred to as dual connectivity, and multilink is also referred to as multi-connectivity. Therefore, the base station that sends the first information to the UE when the UE is accessed and the base station that receives the information that is sent by the UE on the UL based on the first information may be a same base station. In a base station handover scenario and a dual-link or multilink base station addition or switch scenario, the base station that sends the first information to the UE and the base station that receives the information that is sent by the UE on the UL based on the first information may be a same base station, namely, the target base station. Alternatively, the target base station or the source base station may be used to send the first information to the UE, and the target base station may be used to receive the information that is sent by the UE on the UL based on the first information.

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency.

With reference to the first aspect or the first possible implementation of the first aspect, in a second possible implementation, the base station detects second information, where the second information is a scheduling request; and sends the first information to the UE based on the second information. With reference to the first aspect or any possible implementation of the first aspect, in a third possible implementation, before the base station detects the second information, the method further includes: receiving, by the base station, the second information sent by the UE on a first channel.

With reference to the first aspect or any possible implementation of the first aspect, in a fourth possible implementation, the base station configures, in the target cell, the first channel for the UE, and sends configuration information of the first channel to the UE, where the first channel includes a resource used to transmit the second information.

With reference to the first aspect or any possible implementation of the first aspect, in a fifth possible implementation, the first channel includes an uplink control channel PUCCH or a random access channel PRACH.

With reference to the first aspect or any possible implementation of the first aspect, in a sixth possible implementation, that the base station configures, in the target cell, the first channel for the UE includes:
the base station configures the first channel for the UE based on a coverage area of the target cell.

With reference to the first aspect or any possible implementation of the first aspect, in a seventh possible implementation,

the base station configures the PRACH for the UE when the coverage area of the target cell is greater than an area in which the UE is capable of performing transmission without a need of obtaining a timing advance TA; or
the base station configures the first channel for the UE when the coverage area of the target cell is less than an area in which the UE is capable of performing transmission without a need of obtaining a TA, where the first channel includes the uplink control channel PUCCH or the random access channel PRACH.

With reference to the first aspect or any possible implementation of the first aspect, in an eighth possible implementation, the resource used to transmit the second information is based on contention.

With reference to the first aspect or any possible implementation of the first aspect, in a ninth possible implementation, the sending configuration information of the first channel to the UE includes: sending, by the base station, the configuration information of the first channel to the UE by using system broadcast information. With reference to the first aspect or any possible implementation of the first aspect, in a tenth possible implementation, the first information is scrambled by a first radio network transmission identifier RNTI.

With reference to the first aspect or any possible implementation of the first aspect, in an eleventh possible implementation, that the first base station receives the information that is sent by the UE on the UL based on the first information includes:
the first base station receives a message message 3 that is sent by the UE on the UL based on the first information, where the message 3 is scrambled by a first radio network transmission identifier RNTI.

With reference to the first aspect or any possible implementation of the first aspect, in a twelfth possible implementation, the method further includes:

sending, by the first base station, a message 4 to the UE, where the message 4 is used to indicate to the UE that contention resolution succeeds.

With reference to the first aspect or any possible implementation of the first aspect, in a thirteenth possible implementation, the first radio network transmission identifier RNTI is an uplink scheduling request-radio network transmission identifier SR-RNTI.

With reference to the first aspect or any possible implementation of the first aspect, in a fourteenth possible implementation,

$$SR - RNTI = t_{id} + 10 \times n^{C}_{first\ channel},$$

where $t_{id}$ is a subframe index of a resource of an uplink scheduling request SR,

and $n^{C}_{first\ channel}$ channel is a resource index of a contention-based SR in each subframe.

With reference to the first aspect or any possible implementation of the first aspect, in a fifteenth possible implementation,

the scheduling request is indicated through grouping, and different sizes of
the message 3 are indicated to the base station by using different groups. With reference to the first aspect or any possible implementation of the first aspect, in a sixteenth possible implementation, the sending, by a base station in a target cell, first information to UE includes:
sending, by the base station in the target cell, the first information to the UE by using any one of the following: a handover command, a handover control command, a radio resource control RRC reconfiguration command, and a dual-link or multilink link addition or switch command.

According to a second aspect, an access method is provided, including:

receiving, by UE, first information sent by a base station in a target cell, where the first information is an uplink grant message; and
sending, by the UE, information on an uplink UL based on the first information.

With reference to the second aspect, in a first possible implementation,

the base station is a first base station of a to-be-accessed cell; or
the base station is a first base station used as a target base station, or the base station is a second base station used as a source base station, where the target base station is at least one of a base station after handover and a base station after dual-link or multilink switch, and the source base station is at least one of a base station before handover and a base station before dual-link or multilink switch; and
the sending, by the UE, information on an uplink UL based on the first information includes:
sending, by the UE, the information to the first base station on the uplink UL based on the first information.

This aspect of the present invention can be applied to scenarios such as UE access, base station handover, and dual-link or multilink link addition or switch. Dual-link is also referred to as dual connectivity, and multilink is also referred to as multi-connectivity. Therefore, the base station that sends the first information to the UE when the UE is accessed and the base station that receives the information that is sent by the UE on the UL based on the first information may be a same base station. In a base station handover scenario and a dual-link or multilink link addition or switch scenario, the base station that sends the first information to the UE and the base station that receives the information that is sent by the UE on the UL based on the first information may be a same base station, namely, the target base station. Alternatively, the target base station or the source base station may be used to send the first information to the UE, and the target base station may be used to receive the information that is sent by the UE on the UL based on the first information.

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency.

With reference to the second aspect or any possible implementation of the second aspect, in a second possible implementation, the receiving, by UE, first information sent by a base station in a target cell includes:

receiving, by the UE, the first information that is sent by the base station to the UE based on second information.

With reference to the second aspect or any possible implementation of the second aspect, in a third possible implementation, the method further includes:

sending, by the UE, the second information on a first channel, where the second information is a scheduling request.

With reference to the second aspect or any possible implementation of the second aspect, in a fourth possible implementation, the method further includes:

receiving, by the UE, configuration information of the first channel, where the first channel includes a resource used to transmit the second information.

With reference to the second aspect or any possible implementation of the second aspect, in a fifth possible implementation,

the first channel includes an uplink control channel PUCCH or a random access channel PRACH.

With reference to the second aspect or any possible implementation of the second aspect, in a sixth possible implementation, the receiving, by the UE, configuration information of the first channel includes:

receiving, by the UE, system broadcast information, and obtaining the configuration information of the first channel from the system broadcast information.

With reference to the second aspect or any possible implementation of the second aspect, in a seventh possible implementation, before the receiving, by the UE, configuration information of the first channel, the method further includes: implementing, by the UE, downlink synchronization with the target cell of the base station.

With reference to the second aspect or any possible implementation of the second aspect, in an eighth possible implementation, the receiving, by the UE, the first information that is sent by the base station to the UE based on second information includes:

searching, by the UE by using a first radio network transmission identifier, predefined search space for the first information that is sent by the base station based on the second information.

With reference to the second aspect or any possible implementation of the second aspect, in a ninth possible implementation, search space corresponding to each first radio network transmission identifier is different, and/or search space corresponding to each first radio network transmission identifier is distributed.

With reference to the second aspect or any possible implementation of the second aspect, in a tenth possible implementation, the first information is scrambled by the first radio network transmission identifier RNTI.

With reference to the second aspect or any possible implementation of the second aspect, in an eleventh possible implementation, the sending, by the UE, information on an uplink UL based on the first information includes:

sending, by the UE, a message message 3 to the first base station on the uplink UL based on the first information, where the message 3 is scrambled by a first radio network transmission identifier RNTI.

With reference to the second aspect or any possible implementation of the second aspect, in a twelfth possible implementation, the method further includes:

receiving a message 4 sent by the first base station, where the message 4 is used to indicate to the UE that contention resolution succeeds.

With reference to the second aspect or any possible implementation of the second aspect, in a thirteenth possible implementation, the first radio network transmission identifier RNTI is an uplink scheduling request-radio network transmission identifier SR-RNTI.

With reference to the second aspect or any possible implementation of the second aspect, in a fourteenth possible implementation, the receiving, by UE, first information sent by a base station in a target cell includes:

receiving, by the UE, the first information that is sent by the base station in the target cell by using any one of the following: a handover command, a handover control command, an RRC reconfiguration command, and a dual-link or multilink link addition or switch command.

According to a third aspect, a base station is provided, including:

a communications unit, configured to: send, in a target cell, first information to UE, where the first information is an uplink grant UL grant message, so that the UE sends information on an uplink UL based on the first information.

With reference to the third aspect, in a first possible implementation,

the base station is a first base station of a to-be-accessed cell; or

the base station is a first base station used as a target base station, or the base station is a second base station used as a source base station, where the target base station is at least one of a base station after handover and a base station after dual-link or multilink link addition or switch, and the source base station is at least one of a base station before handover and a base station before dual-link or multilink link addition or switch; and

the communications unit of the first base station is further configured to receive the information that is sent by the UE on the UL based on the first information.

This aspect of the present invention can be applied to scenarios such as UE access, base station handover, and dual-link or multilink base station addition or switch. Dual-link is also referred to as dual connectivity, and multilink is also referred to as multi-connectivity. Therefore, the base station that sends the first information to the UE when the UE is accessed and the base station that receives the information that is sent by the UE on the UL based on the first information may be a same base station. In a base station handover scenario and a dual-link or multilink base station addition or switch scenario, the base station that sends the first information to the UE and the base station that receives the information that is sent by the UE on the UL based on the first information may be a same base station, namely, the target base station. Alternatively, the target base station or the source base station may be used to send the first information to the UE, and the target base station may be used to receive the information that is sent by the UE on the UL based on the first information.

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency.

With reference to the third aspect or any possible implementation of the third aspect, in a second possible implementation, the base station further includes:

a detection unit, configured to detect second information, where the second information is a scheduling request, where the communications unit is further configured to send the first information
to the UE based on the second information detected by the detection unit. With reference to the third aspect or any possible implementation of the third aspect, in a third possible implementation,
the communications unit is further configured to receive the second information sent by the UE on a first channel.

With reference to the third aspect or any possible implementation of the third aspect, in a fourth possible implementation, the base station further includes:

a configuration unit, configured to configure, in the target cell, the first channel for the UE, where
the communications unit is further configured to send, to the UE, configuration information of the first channel configured by the configuration unit, where the first channel includes a resource used to
transmit the second information.

With reference to the third aspect or any possible implementation of the third aspect, in a fifth possible implementation,
the first channel includes an uplink control channel PUCCH or a random access channel PRACH.

With reference to the third aspect or any possible implementation of the third aspect, in a sixth possible implementation, the configuration unit is configured to configure the first channel for the UE based on a coverage area of the target cell.

With reference to the third aspect or any possible implementation of the third aspect, in a seventh possible implementation,

when the coverage area of the target cell is greater than an area in which the UE is capable of performing transmission without a need of obtaining a timing advance TA, the configuration unit is configured to configure the PRACH for the UE; or
when the coverage area of the target cell is less than an area in which the UE is capable of performing transmission without a need of obtaining a TA, the configuration unit is configured to configure the first channel for the UE, where the first channel includes the uplink control channel PUCCH or the random access channel PRACH.

With reference to the third aspect or any possible implementation of the third aspect, in an eighth possible implementation, the resource used to transmit the second information is based on contention.

With reference to the third aspect or any possible implementation of the third aspect, in a ninth possible implementation, the communications unit is specifically configured to send the configuration information of the first channel to the UE by using system broadcast information.

With reference to the third aspect or any possible implementation of the third aspect, in a tenth possible implementation, the first information is scrambled by a first radio network transmission identifier RNTI.

With reference to the third aspect or any possible implementation of the third aspect, in an eleventh possible implementation, the communications unit of the first base station is further configured to receive a message message 3 that is sent by the UE on the UL based on the first information, and the message 3 is scrambled by a first radio network transmission identifier RNTI.

With reference to the third aspect or any possible implementation of the third aspect, in a twelfth possible implementation, the communications unit of the first base station is further configured to send a message 4 to the UE, and the message 4 is used to indicate to the UE that contention resolution succeeds.

With reference to the third aspect or any possible implementation of the third aspect, in a thirteenth possible implementation, the first radio network transmission identifier RNTI is an uplink scheduling request-radio network transmission identifier SR-RNTI.

With reference to the third aspect or any possible implementation of the third aspect, in a fourteenth possible implementation,

$$SR - RNTI = t_{id} + 10 \times n^{C}_{first\,channel},$$

where

$t_{id}$ is a subframe index of a resource of an SR, and $n^{C}_{first\,channel}$ is a resource index of a contention-based SR in each subframe.

With reference to the third aspect or any possible implementation of the third aspect, in a fifteenth possible implementation,

the scheduling request is indicated through grouping, and different sizes of the message 3 are indicated to the eNB by using different groups.

With reference to the third aspect or any possible implementation of the third aspect, in a sixteenth possible implementation, the communications unit is specifically configured to send, in the target cell, the first information to the UE by using any one of the following: a handover command, a handover control command, an RRC reconfiguration command, and a dual-link or multilink link addition or switch command.

According to a fourth aspect, UE is provided, including:

a communications unit, configured to receive first information sent by a base station in a target cell, where the first information is an uplink grant message, where
the communications unit is further configured to send information on an uplink UL based on the first information.

With reference to the fourth aspect, in a first possible implementation,

the base station is a first base station of a to-be-accessed cell; or the base station is a first base station used as a target base station, or the base station is a second base station used as a source base station, where the target base station is at least one of a base station after handover and a base station after dual-link or multilink link addition or switch, and the source base station is at least one of a base station before handover and a base station before dual-link or multilink link addition or switch; and
the communications unit is specifically configured to send the information to the first base station on the uplink UL based on the first information.

This aspect of the present invention can be applied to scenarios such as UE access, base station handover, and dual-link or multilink base station addition or switch. Dual-link is also referred to as dual connectivity, and multilink is also referred to as multi-connectivity. Therefore, the base station that sends the first information to the UE when the UE is accessed and the base station that receives the information that is sent by the UE on the UL based on the first information may be a same base station. In a base station handover scenario and a dual-link or multilink base station addition or switch scenario, the base station that sends the first information to the UE and the base station that receives the information that is sent by the UE on the UL based on the first information may be a same base station, namely, the target base station. Alternatively, the target base station or the source base station may be used to send the first information to the UE, and the target base station may be used to receive the information that is sent by the UE on the UL based on the first information.

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency.

With reference to the fourth aspect or any possible implementation of the fourth aspect, in a third possible implementation, the communications unit is specifically configured to receive the first information that is sent by the base station to the UE based on second information.

With reference to the fourth aspect or any possible implementation of the fourth aspect, in a fourth possible implementation, the communications unit is further configured to send the second information on a first channel, and the second information is a scheduling request.

With reference to the fourth aspect or any possible implementation of the fourth aspect, in a fifth possible implementation, the communications unit is further configured to receive configuration information of the first channel, and the first channel includes a resource used to transmit the second information.

With reference to the fourth aspect or any possible implementation of the fourth aspect, in a sixth possible implementation,

the first channel includes an uplink control channel PUCCH or a random access channel PRACH.

With reference to the fourth aspect or any possible implementation of the fourth aspect, in a seventh possible implementation, the communications unit is specifically configured to: receive system broadcast information, and obtain the configuration information of the first channel from the system broadcast information.

With reference to the fourth aspect or any possible implementation of the fourth aspect, in an eighth possible implementation, the UE further includes:

a synchronization unit, configured to implement downlink synchronization with the target cell of the base station.

With reference to the fourth aspect or any possible implementation of the fourth aspect, in a ninth possible implementation, the communications unit is specifically configured to search, by using a first radio network transmission identifier, predefined search space for the first information that is sent by the base station based on the second information.

With reference to the fourth aspect or any possible implementation of the fourth aspect, in a tenth possible implementation, search space corresponding to each first radio network transmission identifier is different, and/or search space corresponding to each first radio network transmission identifier is distributed.

With reference to the fourth aspect or any possible implementation of the fourth aspect, in an eleventh possible implementation, the first information is scrambled by the first radio network transmission identifier RNTI.

With reference to the fourth aspect or any possible implementation of the fourth aspect, in a twelfth possible implementation, the communications unit is specifically configured to send a message message 3 to the first base station on the uplink UL based on the first information, and the message 3 is scrambled by a first radio network transmission identifier RNTI.

With reference to the fourth aspect or any possible implementation of the fourth aspect, in a thirteenth possible implementation, the communications unit is further configured to:

receive a message 4 sent by the first base station, where the message 4 is used to indicate to the UE that contention resolution succeeds.

With reference to the fourth aspect or any possible implementation of the fourth aspect, in a fourteenth possible implementation, the first radio network transmission identifier RNTI is an uplink scheduling request-radio network transmission identifier SR-RNTI.

With reference to the fourth aspect or any possible implementation of the fourth aspect, in a fifteenth possible implementation, the communications unit is specifically configured to receive the first information that is sent by the base station in the target cell by using any one of the following: a handover command, a handover control command, an RRC reconfiguration command, and a dual-link or multilink link addition or switch command.

According to a fifth aspect, a base station is provided, and may include a processor, a memory, and a transceiver. In specific implementation, the processor executes program code in the memory to control the transceiver to implement functions of functional units of the base station in the third aspect, so as to implement the access method in the first aspect.

According to a sixth aspect, UE is provided, and may include a processor, a memory, and a transceiver. In specific implementation, the processor executes program code in the memory to control the transceiver to implement functions of functional units of the base station in the fifth aspect, so as to implement the access method in the second aspect.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG 1 is a schematic structural diagram of a communications system according to an embodiment of the present invention;

FIG 2 is a schematic structural diagram of a communications system according to another embodiment of the present invention;

FIG. 3 is a schematic structural diagram of a base station according to an embodiment of the present invention;

FIG. 4 is a schematic structural diagram of UE according to another embodiment of the present invention;

FIG 5 is a schematic flowchart of an access method according to an embodiment of the present invention;

FIG. 6 is a schematic flowchart of an access method according to another embodiment of the present invention;

FIG 7 is a schematic flowchart of an access method according to still another embodiment of the present invention;

FIG 8 is a schematic structural diagram of a base station according to an embodiment of the present invention; and

FIG. 9 is a schematic structural diagram of UE according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

The embodiments of the solutions are applied to a UDN system, and a basic principle of the solutions is that information transmission on a UL in the UDN system may be performed based on downlink synchronization. Because a cell coverage area of the UDN system is smaller than that of an LTE system, a CP length is sufficient to avoid ISI and ICI that are caused by a time difference between a plurality of UEs due to downlink non-synchronization. For example, referring to Table 1, a contention (WINNER) channel model is used as a basic channel model of the UDN network, and a maximum channel delay is 487 nanoseconds in a B4 scenario.

### Table 1

| Environment Description | Indoor (office: corridor/living room) | | Indoor (hall: conference hall/factory building) | | Indoor to outdoor | Outdoor to indoor |
|---|---|---|---|---|---|---|
| Channel model label | A1 | | B3 | | A2 | B4 |
| LOS vs. NLOS | LOS | NLOS | LOS | NLOS | Not specified | Not specified |
| 50% of a maximum delay/90% of the maximum delay (ns) | 180/37 7 | 146/252 | 125/175 | 175/250 | 175/362 | 239/487 |

The LOS is a line of sight (English full name: Line-Of-Sight), and the NLOS is a non-line of sight (Non-LOS). Therefore, for a typical LTE CP length of 4.7 microseconds, UL synchronization is not performed. A cell radius within which the system can support ICI-free or ISI-free UL detection is:

$$\frac{(4.7-0.487)}{2} \times 10^{-6} \times 3 \times 10^8 = 631m$$

.

Therefore, from a perspective of avoiding interference, UL synchronization is not as necessary in the UDN network as in an LTE network. To be specific, when UE downlink synchronization is implemented, the UE may perform UL transmission at any moment.

The following describes the implementations of the present invention in detail with reference to the accompanying drawings.

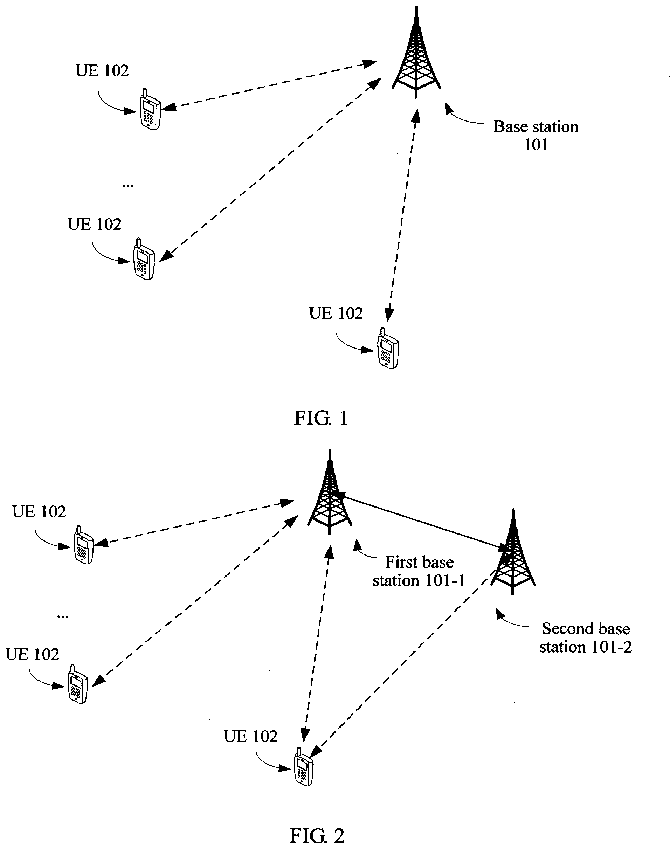

As shown in FIG. 1, an embodiment of the present invention provides a communications system, including a base station 101 and a plurality of UEs 102. The base station 101 is a base station in a UDN system, and separately provides a target cell for the plurality of UEs 102 for random access. This embodiment of the present invention can be applied to scenarios such as UE access (as shown in FIG. 1), base station handover, and dual-link or multilink base station addition or switch. Dual-link is also referred to as dual connectivity, and multilink is also referred to as multi-connectivity. When this embodiment is applied to a UE access scenario, the base station 101 provides a to-be-accessed cell for the UE. When this embodiment is applied to scenarios such as base station handover and dual-link or multilink link addition or switch, as shown in FIG. 2, the base station includes a first base station 101-1 and a second base station 101-2. In the following example, in a base station handover scenario, the first base station 101-1 is used as a target base station to which the UE is handed over, and the second base station 101-2 is used as a source base station to which the UE originally belongs before the UE is handed over to a base station. In a dual-link or multilink link addition or switch scenario, the first base station 101-1 is used as a target base station to which a link of the UE is added or switched, and the second base station 101-2 is used as a source base station to which the link of the UE originally belongs before addition or switch.

At least one UE 102 may be a mobile phone, a tablet computer, a notebook computer, an ultra-mobile personal computer (Ultra-mobile Personal Computer, UMPC for short), a netbook, a personal digital assistant (Personal Digital Assistant, PDA for short), or the like. A type of the UE is not specifically limited in the present invention. It should be noted that FIG. 1 and FIG. 2 show only an example of a quantity of UEs and a quantity of base stations in this embodiment of the present invention. There may be any quantity of UEs and any quantity of base stations in an actual application scenario.

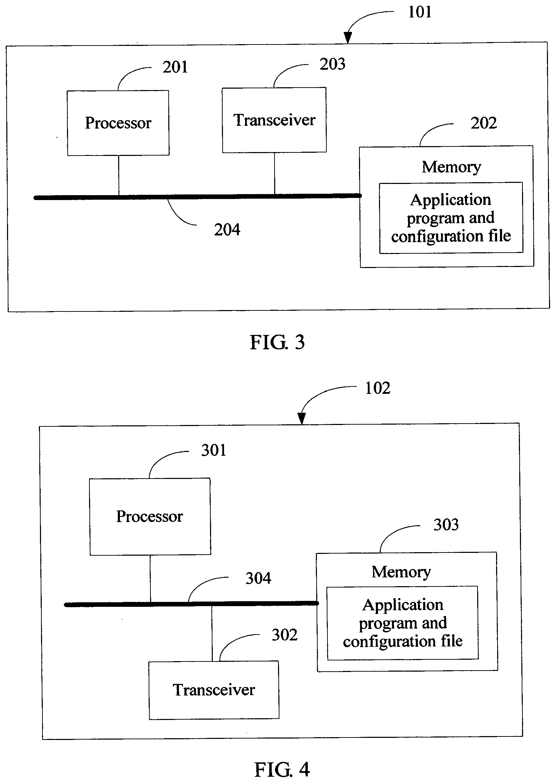

As shown in FIG. 3, the base stations shown in FIG. 1 and FIG. 2 may include a processor 201, a memory 202, and a transceiver 203.

The following describes each component of the base station in detail with reference to FIG. 3.

The processor 201 is a control center of the base station, and may be a processor, or may be a collective name of a plurality of processing elements. For example, the processor 201 is a central processing unit (central processing unit, CPU for short), may be an application-specific integrated circuit (Application Specific Integrated Circuit, ASIC for short), or may be one or more integrated circuits such as one or more microprocessors (digital signal processor, DSP for short) or one or more field programmable gate arrays (Field Programmable Gate Array, FPGA for short) configured to implement the embodiments of the present invention. The processor 201 may perform various functions of the base station by running or executing a software program and/or a module stored in the memory 202 and invoking data stored in the memory 202.

The memory 202 may be a volatile memory (volatile memory) such as a random access memory (random-access memory, RAM for short); or may be a non-volatile memory (non-volatile memory) such as a read-only memory (read-only memory, ROM for short), a flash memory (flash memory), a hard disk drive (hard disk drive, HDD for short), or a solid-state drive (solid-state drive, SSD for short); or may be a combination of the foregoing types of memories. The memory 202 is configured to store a related application program and a configuration file that can be used to implement an access method in the present invention.

The transceiver 203 may be a transceiver antenna of the base station, or a communications unit with a communication capability. The processor 201, the memory 202, and the transceiver 203 are connected by using a bus 204. The bus 204 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 204 may include an address bus, a data bus, a control bus, and the like. For ease of indication, the bus is indicated by using only one bold line in FIG. 3. However, it does not indicate that there is only one bus or only one type of bus.

In specific implementation, the processor 201 controls the transceiver 203 to implement the following functions. The transceiver 203 sends, in a target cell, first information to UE, where the first information is an uplink grant UL grant message; and when being used as a first base station, the transceiver 203 is further configured to receive information that is sent by the UE on an uplink UL based on the first information.

As shown in FIG. 4, the UE shown in FIG 1 and FIG 2 may include a processor 301, a memory 302, and a transceiver 303.

The following describes each component of the UE in detail with reference to FIG. 4. The processor 301 is a control center of the UE, and may be a processor, or may be a collective name of a plurality of processing elements. For example, the processor 301 is a central processing unit (central processing unit, CPU for short), may be an application-specific integrated circuit (Application Specific Integrated Circuit, ASIC for short), or may be one or more integrated circuits such as one or more microprocessors (digital signal processor, DSP for short) or one or more field programmable gate arrays (Field Programmable Gate Array, FPGA for short) configured to implement the embodiments of the present invention. The processor 301 may perform various functions of a base station by running or executing a software program and/or a module stored in the memory 302 and invoking data stored in the memory 302.

The memory 302 may be a volatile memory (volatile memory) such as a random access memory (random-access memory, RAM for short); or may be a non-volatile memory (non-volatile memory) such as a read-only memory (read-only memory, ROM for short), a flash memory (flash memory), a hard disk drive (hard disk drive, HDD for short), or a solid-state drive (solid-state drive, SSD for short); or may be a combination of the foregoing types of memories. The memory 302 is configured to store a related application program and a configuration file that can be used to implement an access method in the present invention.

The transceiver 303 may be a transceiver antenna of the UE, or a communications unit with a communication capability. The processor 301, the memory 302, and the transceiver 303 are connected by using a bus 304. The bus 304 may be an industry standard architecture (English full name: industry standard architecture, ISA for short) bus, a peripheral component interconnect (English full name: peripheral component, PCI for short) bus, an extended industry standard architecture (English full name: extended industry standard architecture, EISA for short) bus, or the like. The bus 304 may include an address bus, a data bus, a control bus, and the like. For ease of indication, the bus is indicated by using only one bold line in FIG 4. However, it does not indicate that there is only one bus or only one type of bus.

In specific implementation, the processor 301 controls the transceiver 303 to implement the following functions. After the UE implements downlink synchronization with a target cell of the base station, the transceiver 303 receives first information sent by the base station in the target cell, where the first information is an uplink grant message; and the transceiver 303 sends information on an uplink UL based on the first information.

The following specifically describes the embodiments of the present invention with reference to the accompanying drawings.

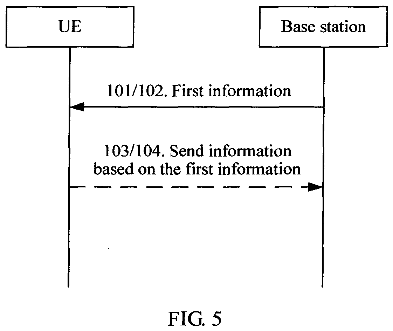

The access method provided in the embodiments of the present invention can be applied to a UDN network. In comparison with an LTE network, an ultra dense network cell coverage area of the UDN is much smaller than a coverage area of a macro cell of LTE. Referring to FIG 5, an embodiment of the present invention provides an access method. The access method is applied to the foregoing communications system, is applicable to access (initial access, re-access (connection re-establishment)), base station handover, or dual-link or multilink switch, and includes the following steps.

101. A base station sends, in a target cell, first information to UE, where the first information is an uplink grant UL grant message.

102. The UE receives the first information sent by the base station in the target cell. 103. The UE sends information on an uplink UL based on the first information. When being applied to an access process, the method further includes the following step.

104. The base station receives the information that is sent by the UE on the uplink UL based on the first information.

When being applied to a base station handover process or a dual-link or multilink base station switch process, the access method specifically includes the following two manners.

Manner 1: The base station handover process or the dual-link or multilink base station switch process is controlled by a first base station.

201. A first base station sends, in a target cell, first information to UE, where the first information is an uplink grant UL grant message.

202. The UE receives the first information sent by the first base station in the target cell.

203. The UE sends information to the first base station on an uplink UL based on the first information.

204. The first base station receives the information that is sent by the UE on the uplink UL based on the first information.

The first base station further needs to notify a second base station of the first information.

Manner 2: The base station handover process or the dual-link or multilink base station switch process is controlled by a second base station.

301. A second base station sends, in a target cell, first information to UE, where the first information is an uplink grant UL grant message.

302. The UE receives the first information sent by the second base station in the target cell.

303. The UE sends information to the first base station on an uplink UL based on the first information.

304. The first base station receives the information that is sent by the UE on the uplink UL based on the first information.

The second base station further needs to notify the first base station of the first information.

In addition, when the foregoing solution is applied to dual-link or multilink base station switch, both the first base station and the second base station may be a secondary base station. Certainly, in a particular case, for the UE in a macro base station macro eNB, if a new link to the secondary base station SeNB is added, the secondary base station SeNB may be used as the first base station and the macro base station may be used as the second base station. Specifically, when a process of adding the new link is controlled by the macro base station, for a process of accessing the secondary base station by the UE, refer to the method in steps 301 to 304. When a process of adding the new link is controlled by the secondary base station, for a process of accessing the secondary base station by the UE, refer to the method in steps 201 to 204. Details are not described again.

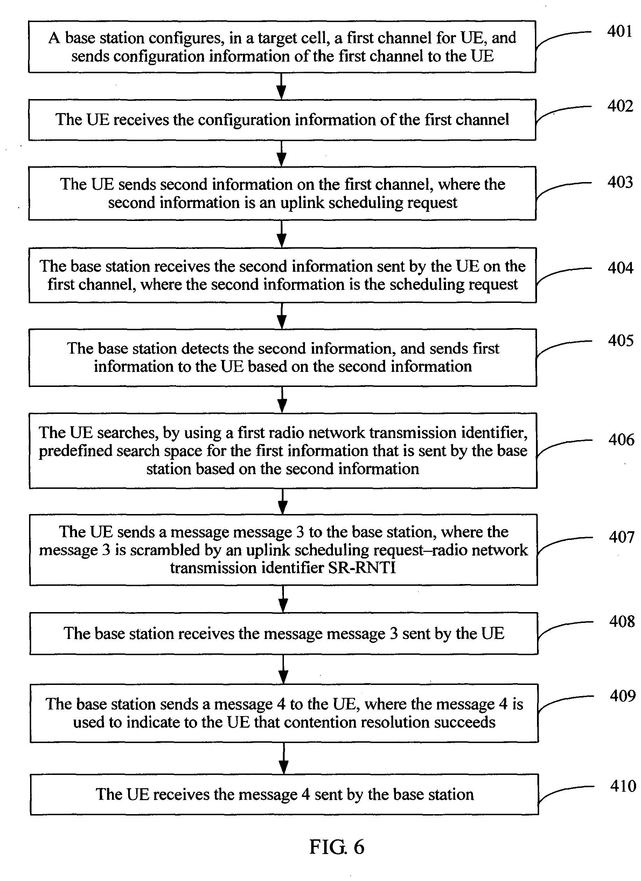

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency. Based on the foregoing implementation, when the method is applied to a UE initial access process or an RRC connection re-establishment process, UE needs to first attempt to perform an RA process of a target cell of a base station. Referring to FIG 6, the solution provided in the present invention specifically includes the following steps when being applied to access.

401. A base station configures, in a target cell, a first channel for UE, and sends configuration information of the first channel to the UE.

Specifically, the base station sends the configuration information of the first channel to the UE by using system broadcast information.

402. The UE receives the configuration information of the first channel.

Step 402 specifically includes: after implementing downlink synchronization with the target cell of the base station, the UE receives the system broadcast information, and obtains the configuration information of the first channel from the system broadcast information.

In step 201, the base station configures, in the target cell, the first channel for the UE, and the first channel includes a resource used to transmit second information. Specifically, the first channel includes an uplink control channel PUCCH or a random access channel PRACH for transmitting the second information. Specifically, for UE that accesses a UDN network cell, the base station may configure a resource used for an SR (English full name: Scheduling Request, Chinese: uplink scheduling request) for the UE, for example, a PUCCH (English full name: Physical Uplink Control Channel, Chinese: physical uplink control channel) resource. Certainly, for UE that accesses an LTE network cell, the base station configures a PRACH (English full name: Physical Random access Channel, Chinese: physical random access channel) resource for the UE. Specifically, the base station configures the first channel for the UE based on a coverage area of the target cell. Specifically, configuration may be performed according to the following principles.

1. When target coverage of a cell is relatively large, for example, when the coverage area of the target cell is greater than an area in which the UE is capable of performing transmission without a need of obtaining a TA, the base station configures the PRACH for the UE, for example, the UE needs to transmit, in the LTE cell, information to the UE; or when the coverage area of the target cell is greater than an area in which the UE performs transmission without using a TA, the eNB may still configure an RA resource of the PRACH in a system message, and the system message is a SIB 2.

2. When the coverage area of the target cell is less than an area in which the UE is capable of performing transmission without a need of obtaining a TA, the base station configures the first channel for the UE, and the first channel may include the PUCCH or the PRACH. For example, if the PUCCH is configured as the first channel, for a sufficiently small cell in which a TA mechanism may be removed in a network such as an SDN network, the eNB configures, only in a system message, an RA resource that includes a contention-based PUCCH (SR resource).

3. The resource of the contention-based PUCCH (SR resource) is reserved from a normal SR resource to avoid a possible conflict.

4. Contention-based SR resources may be grouped to indicate different sizes of a message 3 (English full name: message 3, Chinese: scheduling transmission information, Msg 3 for short) in a random access RA (random access) process to the eNB.

5. The contention-based PUCCH (SR resource) may be used for contention-based and non-contention-based RA resources.

In addition, according to the foregoing principles, the base station configures only one type of RA resource for the UE, to be specific, the base station configures either the PUCCH or the PRACH.

In addition, a maximum shift of a radio block PRB (English full name: physical resource block) of the RA resource is $\Delta_{shift}^{PUCCH} = 12$. For example, if the maximum shift $\Delta_{shift}^{PUCCH} = 12$ is selected, each PRB supports a maximum of 12 resources through code domain extension and simultaneously uses three times of time domain extension. $\Delta_{shift}^{PUCCH} = 12$ Selecting $\Delta_{shift}^{PUCCH} = 12$ is proper because a shift depends on a maximum channel propagation delay. As mentioned in the foregoing principles, this delay is very small.

Therefore, each PRB supports 12 × 3 = 36 resources, and two PRBs support 72 resources, which are more than required 64 resources. In this case, a smaller RA resource granularity may be used in information transmission, so that the eNB can more flexibly configure the RA resource.

403. The UE sends second information on the first channel, where the second information is an uplink scheduling request.

404. The base station receives the second information sent by the UE on the first channel, where the second information is a scheduling request. For example, the scheduling request is an uplink scheduling request SR. The SR is used as an example for description in this solution, but does not constitute a limitation. Because information transmission is bidirectional, an uplink is only a direction relative to a downlink, and does not include another meaning.

405. The base station detects the second information, and sends first information to the UE based on the second information.

Optionally, the first information is scrambled by a radio network transmission identifier RNTI, and the RNTI may be an uplink scheduling request-radio network transmission identifier SR-RNTI (English full name: Scheduling Request-Radio Network Temporary Identity, Chinese: uplink scheduling request-radio network temporary identifier). The first information may be sent by using an RRC reconfiguration command.

406. The UE searches, by using a first radio network transmission identifier, predefined search space for the first information that is sent by the base station based on the second information.

When the first radio network transmission identifier is the SR-RNTI, step 406 specifically includes: the UE searches predefined search space corresponding to each SR-RNTI for UL grant information. $SR\text{-}RNTI\!=\!t_{id}$ $+10\times n^C_{first\ channel}$, where $t_{id}$ is a subframe index of a resource of the uplink scheduling request SR, and $n^C_{first\ channel}$ is a resource index of a contention-based SR in each subframe. The SR-RNTI depends on the SR resource selected by the UE.

For example, the first channel (first Channel) is the PUCCH. The contention-based PUCCH (SR resource) may be randomly selected by the UE. In an example, a PUCCH resource index is repeatedly used. For example,

$$SR - RNTI = t_{id} + 10 \times n^C_{PUCCH.}$$

$t_{id}$ is the subframe index of the resource of the SR, and $n^C_{PUCCH}$ is the resource index of the contention-based SR in each subframe. In this way, the SR-RNTI may be clearly related to each SR resource.

In addition, the UE searches the predefined search space for the UL grant information by using the uplink scheduling request-radio network transmission identifier, the search space corresponding to each uplink scheduling request-radio network transmission identifier is different, and/or the search space corresponding to each uplink scheduling request-radio network transmission identifier is distributed, in other words, the search space of each SR-RNTI is different and scattered. In an example, the search space of the SR-RNTI is associated with an RNTI value, so that the UE searches the predefined search space for the UL grant information by using the SR-RNTI. Details are as follows:

E.g. For the SR-specific search space $S^{(L)}_k$ at aggregation level $L$, the variable $Y_k$ is defined by

$$Y_k = (A \cdot Y_{k-1})\ mod\ D$$

where $Y_{-1} = n_{RNTI} \neq 0$, $A = 39827$, $D = 65537$ and $k = \lfloor n_s/2 \rfloor$, $n_s$ is the slot number within a radio frame. The RNTI value used for $n_{RNTI}$ is decided by the used PUCCH (SR) resource.

In the foregoing example, for SR-specific search space $S^{(L)}_k$, an aggregation level is L, and a variable $Y_k$ is defined as:

$$Y_k = (A \bullet Y_{k-1}) \bmod D,$$

where
$Y_{-1} = n_{RNTI} \neq 0$, A and D are any given numbers, $k = \lfloor n_s / 2 \rfloor$, and $n_s$ is a timeslot number in a radio frame. The RNTI value used for $n_{RNTI}$ depends on the SR resource.

407. The UE sends a message message 3 to the base station, where the message 3 is scrambled by an uplink scheduling request-radio network transmission identifier SR-RNTI.

In step 407, the message 3 is sent by the UE on an uplink UL based on the first information.

The uplink scheduling request in step 403 is indicated through grouping, and different sizes of the message 3 are indicated to the eNB by using different groups.

408. The base station receives the message message 3 sent by the UE.

In steps 207 and 208, if the scheduling transmission information supports a hybrid automatic repeat request (English full name: Hybrid Automatic Repeat Request, HARQ for short), the UE retransmits the scheduling transmission information to the base station, and the base station receives the scheduling transmission information retransmitted by the UE.

409. The base station sends a message 4 to the UE, where the message 4 is used to indicate to the UE that contention resolution succeeds.

410. The UE receives the message 4 sent by the base station.

The message 4 may include a C-RNTI (English full name: Cell-Radio Network Temporary Identifier, Chinese: cell radio network temporary identifier) indicating that process resolution corresponding to the UE succeeds.

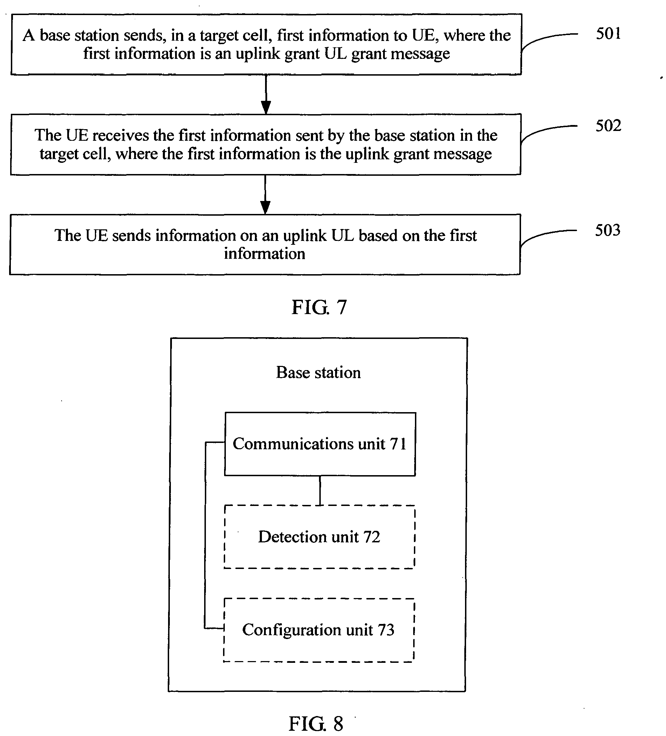

For a base station handover solution or a dual-link or multilink switch solution, referring to FIG 7, a method for accessing a target cell by UE includes the following steps.

501. A base station sends, in a target cell, first information to UE, where the first information is an uplink grant UL grant message.

The first information is sent by using at least one of the following: a handover command, a handover control command, and a dual-link or multilink link addition or switch command.

502. The UE receives the first information sent by the base station in the target cell, where the first information is the uplink grant message.

503. The UE sends information on an uplink UL based on the first information.

The UE may send, to the base station based on the uplink grant message, RRC (English full name: Radio Resource Control, Chinese: radio resource control) connection reconfiguration complete signaling indicating successful radio resource control handover, to indicate that cell handover is completed. In this way, UL transmission from the UE to the target cell of the base station can be quickly initiated, and an RA process of a conventional LTE system does not need to be performed. Referring to the foregoing embodiment, the base station in step 501 may be a first base station or a second base station. After step 503, the first base station receives the information sent by the UE on the UL. When the base station in step 501 is the first base station, the first base station further needs to notify the second base station of the first information, or when the base station in step 501 is the second base station, the second base station further needs to notify the first base station of the first information.

For the base station handover (or dual-link/multilink addition and/or switch) solution, a possible problem in the foregoing mechanism is: after receiving a source base station handover preparation message (dual-link/multilink addition and/or switch preparation message), a target base station generates a UL grant message and reserves, in a specific time period, a UL resource specified by the UL grant message. However, actual handover (dual-link/multilink addition and/or switch) may occur after a period of time, or never occurs.

Case 1: Handover (dual-link/multilink addition and/or switch) occurs after a period of time. Considering a format of the UL grant message, a time that the target base station needs to wait to schedule the reserved UL resource after the target base station sends the UL grant message is unknown. The target base station does not exactly know when the UE is handed over (dual-link/multilink addition and/or switch), and therefore it is difficult to determine when to schedule these uplink resources (specified UL resources). Considering a worst-case delay in a process in which the UE receives a handover command (dual-link/multilink addition and/or switch) and performs downlink synchronization with the target cell, a scheduler needs to make a conservative estimation. However, this imposes a requirement on the scheduler of the target base station. In this case, a handover process actually takes a longer time because the scheduler needs to wait for a resource even if the UE quickly accesses the target cell.

To resolve the problem in the case 1, a source cell may be restricted to limit a delay. For example, a random access-free handover RACH-less handover (Random Access Channel, random access channel) (and random access-free dual-link/multilink addition and/or switch) may be defined as fast triggered handover (dual-link/multilink addition and/or switch). To be specific, provided that the eNB determines that the handover process is random access-free handover, the handover (dual-link/multilink addition and/or switch) needs to be quickly triggered. When the UL resource specified by the uplink grant message is configured, the configuration is performed in a relatively short waiting time, and the source base station is required to make a quick response or perform handover on the UE, to reduce a handover time. Therefore, in the foregoing random access-free handover (dual-link/multilink addition and/or switch), the uplink grant message and/or the UL resource specified by the uplink grant message are/is notified with a relatively small delay, and the source base station can make a quick response or perform handover on the UE (dual-link/multilink addition and/or switch). Although the target eNB still needs to consider a delay in implementing downlink synchronization by the UE, this can reduce uncertainty. Alternatively, the target base station may allocate a plurality of resources in a period of time, similar to an SPS (Semi-Persistent Scheduling, semi-persistent scheduling) allocation manner in a short time period. Semi-persistent scheduling usually is that the eNB semi-persistently allocates some resources and does not need to dynamically provide a notification by using grant signaling. These resources are pre-allocated by using a semi-persistent scheduling instruction, and emerge at a particular interval. Herein, that the target base station may allocate a plurality of resources in a period of time means that in this period of time, some resources are granted at a particular interval by using uplink grant signaling in a manner similar to semi-persistent scheduling. To be specific, the target base station reserves some uplink resources, and the UE may obtain the uplink resource at a specific time without sending a requirement indication. In this way, the UE does not need to rely on dynamic grant signaling each time to obtain the resource and perform uplink transmission. Therefore, an access delay can be reduced.

Case 2: Handover (dual-ink/multilink addition and/or switch) does not occur. To be specific, the UE does not use the scheduled UL resource, for example, due to an uplink synchronization failure, a handover failure, or handover to a wrong cell, and the target base station may only consider that the scheduled UL resource is lost during transmission. If the UL grant message supports a HARQ, a series of HARQ NACK may exist until a HARQ process ends, and this means that resources are wasted in two directions (an uplink and a downlink).

To resolve the problem in the case 2, if the source base station can always quickly send a handover (dual link/multilink addition and/or switch) cancellation message, the problem is alleviated. However, in most cases, the source base station does not know that handover (dual link/multilink addition and/or switch) fails until the UE re-establishes a connection in another cell. A simplest message procedure design is that the UL message does not use the HARQ, to be specific, maxHARQ (a maximum quantity of retransmission times) - Tx (a quantity of sending times) = 1 is set for the handover process. For the dual-link or multilink switch solution, there is a problem similar to that in the base station handover solution. A method for the solution is the same as that in the case 1 and the case 2 of the base station handover solution. Details are not described herein again. In the foregoing solutions, "A/B" indicates A or B; and A and/or B indicate/indicates the following three cases: A, or B, or A and B. Referring to FIG. 8, a base station is provided. The base station is configured to implement the foregoing access method and includes:

a communications unit 71, configured to: send, in a target cell, first information to UE, where the first information is an uplink grant UL grant message, so that the UE sends information on an uplink UL based on the first information.

In the foregoing solution, the base station directly sends, in the target cell, the uplink UL grant message to the UE, so that the UE can send the information on the UL base on the UL grant message. In comparison with the prior art, uplink synchronization does not need to be performed by using a TA mechanism in this solution, thereby simplifying an RA process in a UDN network and improving system efficiency.

Optionally, the base station is a first base station of a to-be-accessed cell; or the base station is a first base station used as a target base station, or the base station is a second base station used as a source base station, where the target base station is at least one of a base station after handover and a base station after dual-link or multilink link addition or switch, and the source base station is at least one of a base station before handover and a base station before dual-link or multilink link addition or switch.

The communications unit of the first base station is further configured to receive the information that is sent by the UE on the UL based on the first information. Optionally, the base station further includes:

a detection unit 72, configured to detect second information, where the second information is a scheduling request.

The communications unit 71 is further configured to send the first information to the UE based on the second information detected by the detection unit 72.

Optionally, the communications unit 71 is further configured to receive the second information sent by the UE on a first channel.

Optionally, the base station further includes a configuration unit 73, configured to configure, in the target cell, the first channel for the UE.

The communications unit 71 is further configured to send, to the UE, configuration information of the first channel configured by the configuration unit, where the first channel includes a resource used to transmit the second information.

Optionally, the first channel includes an uplink control channel PUCCH or a random access channel PRACH.

Optionally, the configuration unit 73 is configured to configure the first channel for the UE based on a coverage area of the target cell.

Optionally, when the coverage area of the target cell is greater than an area in which the UE is capable of performing transmission without a need of obtaining a timing advance TA, the configuration unit 73 is configured to configure the PRACH for the UE; or

when the coverage area of the target cell is less than an area in which the UE is capable of performing transmission without a need of obtaining a TA, the configuration unit 73 is configured to configure the first channel for the UE, where the first channel includes the uplink control channel PUCCH or the random access channel PRACH.

Optionally, the resource used to transmit the second information is based on contention.

Optionally, the communications unit 71 is specifically configured to send the configuration information of the first channel to the UE by using system broadcast information.

Optionally, the first information is scrambled by a first radio network transmission identifier RNTI.

Optionally, the communications unit 71 of the first base station is further configured to receive a message message 3 that is sent by the UE on the UL based on the first information, and the message 3 is scrambled by a first radio network transmission identifier RNTI.

Optionally, the communications unit 71 of the first base station is further configured to send a message 4 to the UE, and the message 4 is used to indicate to the UE that contention resolution succeeds.

Optionally, the first radio network transmission identifier RNTI is an uplink scheduling request-radio network transmission identifier SR-RNTI.

Optionally, $SR\text{-}RNTI = t_{id} + 10 \times n^{C}_{first\ channel}$, where $t_{id}$ is a subframe index of a resource of an SR, and $n^{C}_{first\ channel}$ is a resource index of a contention-based SR in each subframe.

Optionally, the scheduling request is indicated through grouping, and different sizes of the message 3 are indicated to the eNB by using different groups.

Optionally, the communications unit 71 is specifically configured to send, in the target cell, the first information to the UE by using any one of the following: a handover command, a handover control command, an RRC reconfiguration command, and a dual-link or multilink link addition or switch command.

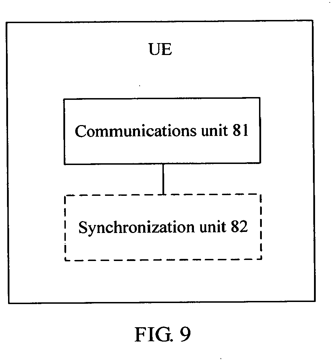

Referring to FIG 9, UE is provided, including:

a communications unit 81, configured to receive first information sent by a base station in a target cell, where the first information is an uplink grant message.

The communications unit 81 is further configured to send information on an uplink UL based on the first information.

Optionally, the base station is a first base station of a to-be-accessed cell; or the base station is a first base station used as a target base station, or the base station is a second base station used as a source base station, where the target base station is at least one of a base station after handover and a base station after dual-link or multilink link addition or switch, and the source base station is at least one of a base station before handover and a base station before dual-link or multilink link addition or switch.

The communications unit 81 is specifically configured to send the information to the first base station on the uplink UL based on the first information.

Optionally, the communications unit 81 is specifically configured to receive the first information that is sent by the base station to the UE based on second information. Optionally, the communications unit 81 is further configured to send the second information on a first channel, and the second information is a scheduling request. Optionally, the communications unit 81 is further configured to receive configuration information of the first channel, and the first channel includes a resource used to transmit the second information.

Optionally, the first channel includes an uplink control channel PUCCH or a random access channel PRACH.

Optionally, the communications unit 81 is specifically configured to: receive system broadcast information, and obtain the configuration information of the first channel from the system broadcast information.

Optionally, the UE further includes:

a synchronization unit 82, configured to implement downlink synchronization with the target cell of the base station.

Optionally, the communications unit 81 is specifically configured to search, by using a first radio network transmission identifier, predefined search space for the first information that is sent by the base station based on the second information. Optionally, search space corresponding to each first radio network transmission identifier is different, and/or search space corresponding to each first radio network transmission identifier is distributed.

Optionally, the first information is scrambled by the first radio network transmission identifier RNTI.

Optionally, the communications unit 81 is specifically configured to send a message message 3 to the first base station on the uplink UL based on the first information, and the message 3 is scrambled by a first radio network transmission identifier RNTI. Optionally, the communications unit 81 is further configured to:

receive a message 4 sent by the first base station, where the message 4 is used to indicate to the UE that contention resolution succeeds.

Optionally, the first radio network transmission identifier RNTI is an uplink scheduling request-radio network transmission identifier SR-RNTI.

Optionally, the communications unit 81 is specifically configured to receive the first information that is sent by the base station in the target cell by using any one of the following: a handover command, a handover control command, an RRC reconfiguration command, and a dual-link or multilink link addition or switch command.

In addition, a computer readable medium (or medium) is further provided, including a computer readable instruction for performing the following operations when the computer readable instruction is executed: performing operations in the methods in the foregoing embodiments.

In addition, a computer program product is further provided, including the foregoing computer readable medium.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

Persons of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (English full name: read-only memory, ROM for short), a random access memory (English full name: random access memory, RAM for short), a magnetic disk, or an optical disc.

The descriptions are only specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims. Finally, it should be noted that the foregoing embodiments are merely intended for describing the technical solutions of the present invention, but not for limiting the present invention. Although the present invention is described in detail with reference to the embodiments, persons of ordinary skill in the art should understand that they may still make modifications to the specific embodiments of the present invention or make equivalent replacements to some or all technical features thereof. However, of the scope of protection of the present invention is defined by Art. 69 of the EPC protocol.

**Claims**

1. An access method, comprising:

   sending (501), by a base station (101), in a target cell, first information to user equipment, UE, (102) wherein the first information is an uplink, UL, grant message, so that the UE sends (503) information on an uplink, UL, based on the first information;
   detecting, by the base station, second information, wherein the second information is a scheduling request; and sending the first information to the UE based on the second information; **characterised by**
   the scheduling request being indicated through grouping, and different sizes of the message 3 are indicated to the base station by using different groups, wherein contention-based SR resources are grouped to indicate the different sizes of the message 3.

2. The method according to claim 1, wherein
   the base station is a first base station of a to-be-accessed cell; or
   the base station is a first base station used as a target base station, or the base station is a second base station used as a source base station, wherein the target base station is at least one of a base station after handover and a base station after dual-link or multilink link addition or switch, and the source base station is at least one of a base station before handover and a base station before dual-link or multilink link addition or switch; and

the method further comprises:
receiving, by the first base station, the information that is sent by the UE on the UL based on the first information.

3.  The method according to any one of claims 1 to 2, wherein the first information is scrambled (407) by a first radio network transmission identifier RNTI.

4.  The method according to claim 2, wherein the receiving, by the first base station, the information that is sent by the UE on the UL based on the first information comprises:
receiving (408), by the first base station, a message 3 that is sent by the UE on the UL based on the first information, wherein the message 3 is scrambled by a first radio network transmission identifier RNTI.

5.  The method according to claim 4, wherein the method further comprises:
sending (409), by the first base station, a message 4 to the UE, wherein the message 4 is used to indicate to the UE that contention resolution succeeds.

6.  The method according to any one of claims 1 to 5, wherein the sending, by a base station in a target cell, first information to UE comprises:
sending, by the base station in the target cell, the first information to the UE by using any one of the following: a handover command, a handover control command, a radio resource control RRC reconfiguration command, and a dual-link or multilink link addition or switch command.

7.  An access method, comprising:

receiving (502), by user equipment, UE, first information sent by a base station in a target cell, wherein the first information is an uplink grant message; and
sending (503), by the UE, information on an uplink UL based on the first information;
detecting, by the base station, second information, wherein the second information is a scheduling request; and
sending the first information to the UE based on the second information; **characterised by**
the scheduling request being indicated through grouping, and different sizes of the message 3 are indicated to the base station by using different groups, wherein contention-based SR resources are grouped to indicate the different sizes of the message 3.

8.  The method according to claim 7, wherein
the base station is a first base station of a to-be-accessed cell; or
the base station is a first base station used as a target base station, or the base station is a second base station used as a source base station, wherein the target base station is at least one of a base station after handover and a base station after dual-link or multilink link addition or switch, and the source base station is at least one of a base station before handover and a base station before dual-link or multilink link addition or switch; and
the sending, by the UE, information on an uplink UL based on the first information comprises:
sending, by the UE, the information to the first base station on the uplink UL based on the first information.

9.  The method according to claim 7 or 8, wherein the receiving, by UE, first information sent by a base station in a target cell comprises:
receiving, by the UE, the first information that is sent by the base station to the UE based on second information.

10. The method according to claim 9, wherein the receiving, by the UE, the first information that is sent by the base station to the UE based on second information comprises:
searching (406), by the UE by using a first radio network transmission identifier, predefined search space for the first information that is sent by the base station based on the second information.

11. The method according to claim 9, wherein search space corresponding to each first radio network transmission identifier is different, and/or search space corresponding to each first radio network transmission identifier is distributed.

12. The method according to claim 8, wherein the sending, by the UE, information on an uplink UL based on the first information comprises:
sending, by the UE, a message message 3 to the first base station on the uplink UL based on the first information, wherein the message 3 is scrambled (407) by a first radio network transmission identifier RNTI.

**13.** The method according to any one of claims 7 to 12, wherein the receiving, by UE, first information sent by a base station in a target cell comprises:
receiving, by the UE, the first information that is sent by the base station in the target cell by using any one of the following: a handover command, a handover control command, an RRC reconfiguration command, and a dual-link or multilink link addition or switch command.

**Patentansprüche**

**1.** Zugriffsverfahren, umfassend:

Senden (501), durch eine Basisstation (101), in einer Zielzelle, von ersten Informationen an eine Benutzerausrüstung, UE, (102), wobei die ersten Informationen eine Aufwärtsstrecken- bzw. UL-Gewährungsnachricht sind, so dass die UE Informationen auf einer Aufwärtsstrecke, UL, basierend auf den ersten Informationen, sendet (503);
Detektieren, durch die Basisstation, von zweiten Informationen, wobei die zweiten Informationen eine Planungsanforderung sind; und
Senden der ersten Information an die UE basierend auf den zweiten Informationen;
**dadurch gekennzeichnet, dass** die Planungsanforderung durch Gruppierung angegeben wird und unterschiedliche Größen der Nachricht 3 der Basisstation durch Verwendung unterschiedlicher Gruppen angegeben werden, wobei konfliktbasierte SR-Betriebsmittel gruppiert werden, um die unterschiedlichen Größen der Nachricht 3 anzugeben.

**2.** Verfahren nach Anspruch 1, wobei
die Basisstation eine erste Basisstation einer Zelle ist, auf die zugegriffen werden soll; oder die Basisstation eine erste Basisstation ist, die als eine Zielbasisstation verwendet wird, oder die Basisstation eine zweite Basisstation ist, die als eine Ausgangsbasisstation verwendet wird, wobei die Zielbasisstation mindestens eine einer Basisstation nach Übergabe und einer Basisstation nach Doppelverknüpfung- oder Mehrfachverknüpfung-Verknüpfungshinzufügung oder -wechsel ist und die Ausgangsbasisstation mindestens eine einer Basisstation vor Übergabe und einer Basisstation vor Doppelverknüpfung- oder Mehrfachverknüpfung-Verknüpfungshinzufügung oder -wechsel ist; und
das Verfahren ferner umfasst:
Empfangen, durch die erste Basisstation, der Informationen, die durch die UE auf der UL gesendet werden, basierend auf den ersten Informationen.

**3.** Verfahren nach einem der Ansprüche 1 bis 2, wobei die ersten Informationen durch eine erste Funknetzwerk-Übertragungskennung RNTI verwürfelt werden (407).

**4.** Verfahren nach Anspruch 2, wobei das Empfangen, durch die erste Basisstation, der Informationen, die durch die UE auf der UL gesendet werden, basierend auf den ersten Informationen umfasst:
Empfangen (408), durch die erste Basisstation, einer Nachricht 3, die durch die UE auf der UL gesendet wird, basierend auf den ersten Informationen, wobei die Nachricht 3 durch eine erste Funknetzwerk-Übertragungskennung RNTI verwürfelt wird.

**5.** Verfahren nach Anspruch 4, wobei das Verfahren ferner umfasst:
Senden (409), durch die erste Basisstation, einer Nachricht 4 an die UE, wobei die Nachricht 4 verwendet wird, der UE anzugeben, dass Konfliktauflösung gelingt.

**6.** Verfahren nach einem der Ansprüche 1 bis 5, wobei das Senden, durch eine Basisstation in einer Zielzelle, erster Informationen an eine UE umfasst:
Senden, durch die Basisstation in der Zielzelle, der ersten Informationen an die UE unter Verwendung eines der Folgenden: ein Übergabebefehl, ein Übergabesteuerbefehl, ein Funkbetriebsmittelsteuerung- bzw. RRC-Neukonfigurationsbefehl und ein Doppelverknüpfung- oder Mehrfachverknüpfung-Verknüpfungshinzufügungs- oder -wechselbefehl.

**7.** Zugriffsverfahren, umfassend:

Empfangen (502), durch eine Benutzerausrüstung, UE, von ersten Informationen, die durch eine Basisstation in einer Zielzelle gesandt wurden, wobei die ersten Informationen eine Aufwärtsstrecken-Gewährungsnachricht sind; und

Senden (503), durch die UE, von Informationen auf einer Aufwärtsstrecke UL basierend auf den ersten Informationen;

Detektieren, durch die Basisstation, von zweiten Informationen, wobei die zweiten Informationen eine Planungsanforderung sind; und

Senden der ersten Informationen an die UE basierend auf den zweiten Informationen;

**dadurch gekennzeichnet, dass** die Planungsanforderung durch Gruppierung angegeben wird und unterschiedliche Größen der Nachricht 3 der Basisstation durch Verwendung unterschiedlicher Gruppen angegeben werden, wobei konfliktbasierte SR-Betriebsmittel gruppiert werden, um die unterschiedlichen Größen der Nachricht 3 anzugeben.

8. Verfahren nach Anspruch 7, wobei
die Basisstation eine erste Basisstation einer Zelle ist, auf die zugegriffen werden soll; oder die Basisstation eine erste Basisstation ist, die als eine Zielbasisstation verwendet wird, oder die Basisstation eine zweite Basisstation ist, die als eine Ausgangsbasisstation verwendet wird, wobei die Zielbasisstation mindestens eine einer Basisstation nach Übergabe und einer Basisstation nach Doppelverknüpfung- oder Mehrfachverknüpfung-Verknüpfungshinzufügung oder -wechsel ist und die Ausgangsbasisstation mindestens eine einer Basisstation vor Übergabe und einer Basisstation vor Doppelverknüpfung- oder Mehrfachverknüpfung-Verknüpfungshinzufügung oder -wechsel ist; und das Senden, durch die UE, von Informationen auf einer Aufwärtsstrecke UL basierend auf den ersten Informationen umfasst:

Senden, durch die UE, der Informationen an die erste Basisstation auf der Aufwärtsstrecke UL basierend auf den ersten Informationen.

9. Verfahren nach Anspruch 7 oder 8, wobei das Empfangen, durch eine UE, von ersten Informationen, die durch eine Basisstation in einer Zielzelle gesandt wurden, umfasst:
Empfangen, durch die UE, der ersten Informationen, die durch die Basisstation an die UE gesandt wurden, basierend auf zweiten Informationen.

10. Verfahren nach Anspruch 9, wobei das Empfangen, durch die UE, der ersten Informationen, die durch die Basisstation an die UE gesandt wurden, basierend auf zweiten Informationen umfasst:
Durchsuchen (406), durch die UE unter Verwendung einer ersten Funknetzwerk-Übertragungskennung, eines im Voraus definierten Suchraums auf die ersten Informationen, die durch die Basisstation gesandt wurden, basierend auf den zweiten Informationen.

11. Verfahren nach Anspruch 9, wobei ein mit jeder ersten Funknetzwerk-Übertragungskennung korrespondierender Suchraum unterschiedlich ist und/oder ein mit jeder ersten Funknetzwerk-Übertragungskennung korrespondierender Suchraum verteilt ist.

12. Verfahren nach Anspruch 8, wobei das Senden, durch die UE, von Informationen auf einer Aufwärtsstrecke UL basierend auf den ersten Informationen umfasst:
Senden, durch die UE, einer Nachricht Nachricht 3 an die erste Basisstation auf der Aufwärtsstrecke UL basierend auf den ersten Informationen, wobei die Nachricht 3 durch eine erste Funknetzwerk-Übertragungskennung RNTI verwürfelt wird (407).

13. Verfahren nach einem der Ansprüche 7 bis 12, wobei das Empfangen, durch eine UE, von ersten Informationen, die durch eine Basisstation in einer Zielzelle gesandt wurden, umfasst:
Empfangen, durch die UE, der ersten Informationen, die durch die Basisstation in der Zielzelle gesandt wurden, unter Verwendung eines der Folgenden: ein Übergabebefehl, ein Übergabesteuerbefehl, ein RRC-Neukonfigurationsbefehl und ein Doppelverknüpfung- oder Mehrfachverknüpfung-Verknüpfungshinzufügungs- oder -wechselbefehl.

## Revendications

1. Procédé d'accès comprenant :

l'envoi (501), par une station de base (101), dans une cellule cible, de premières informations à un équipement d'utilisateur, UE (102), dans lequel les premières informations sont un message d'autorisation de liaison montante, UL, afin que l'UE envoie (503) des informations sur une liaison montante, UL, sur la base des premières informations ;

la détection, par la station de base, de secondes informations, dans lequel les secondes informations sont une demande de planification ; et

l'envoi des premières informations à l'UE sur la base des secondes informations ;

**caractérisé en ce que** la demande de planification est indiquée par l'intermédiaire d'un regroupement, et différentes tailles du message 3 sont indiquées à la station de base au moyen de différents groupes, dans lequel des ressources SR à base de contention sont regroupées pour indiquer les différentes tailles du message 3.

2. Procédé selon la revendication 1,

la station de base étant une première station de base d'une cellule à laquelle accéder ; ou la station de base étant une première station de base utilisée comme station de base cible, ou la station de base étant une seconde station de base utilisée comme station de base source, dans lequel la station de base cible est au moins l'une d'une station de base après un transfert et d'une station de base après un ajout ou une commutation de liaison double ou multiple, et la station de base source est au moins l'une d'une station de base avant un transfert et d'une station de base avant un ajout ou une commutation de liaison double ou multiple ; et

le procédé comprenant en outre :

la réception, par la première station de base, des informations qui sont envoyées par l'UE sur l'UL sur la base des premières informations.

3. Procédé selon l'une quelconque des revendications 1 et 2, dans lequel les premières informations sont brouillées (407) par un premier identifiant de transmission de réseau radio, RNTI.

4. Procédé selon la revendication 2, dans lequel la réception, par la première station de base, des informations qui sont envoyées par l'UE sur l'UL sur la base des premières informations comprend :

la réception (408), par la première station de base, d'un message 3 qui est envoyé par l'UE sur l'UL sur la base des premières informations, dans lequel le message 3 est brouillé par un premier identifiant de transmission de réseau radio, RNTI.

5. Procédé selon la revendication 4, le procédé comprenant en outre :

l'envoi (409), par la première station de base, d'un message 4 à l'UE, dans lequel le message 4 est utilisé pour indiquer à l'UE la réussite de la résolution de la contention.

6. Procédé selon l'une quelconque des revendications 1 à 5, dans lequel l'envoi, par une station de base dans une cellule cible, de premières informations à l'UE comprend :

l'envoi, par la station de base dans la cellule cible, des premières informations à l'UE au moyen de l'une quelconque des instructions suivantes : une instruction de transfert, une instruction de commande de transfert, une instruction de reconfiguration de commande de ressource radio, RRC, et une instruction d'ajout ou de commutation de liaison double ou multiple.

7. Procédé d'accès, comprenant :

la réception (502), par un équipement d'utilisateur, UE, de premières informations envoyées par une station de base dans une cellule cible, dans lequel les premières informations sont un message d'autorisation de liaison montante ; et

l'envoi (503), par l'UE, d'informations sur une liaison montante UL sur la base des premières informations ;

la détection, par la station de base, de secondes informations, dans lequel les secondes informations sont une demande de planification ; et

l'envoi des premières informations à l'UE sur la base des secondes informations ;

**caractérisé en ce que** la demande de planification est indiquée par l'intermédiaire d'un regroupement, et différentes tailles du message 3 sont indiquées à la station de base au moyen de différents groupes, dans lequel des ressources SR à base de contention sont regroupées pour indiquer les différentes tailles du message 3.

8. Procédé selon la revendication 7, dans lequel

la station de base est une première station de base d'une cellule à laquelle accéder ; ou

la station de base est une première station de base utilisée comme station de base cible, ou la station de base est une seconde station de base utilisée comme station de base source, dans lequel la station de base cible est au moins l'une d'une station de base après un transfert et d'une station de base après un ajout ou une commutation de liaison double ou multiple, et la station de base source est au moins l'une d'une station de base avant un transfert et d'une station de base avant un ajout ou une commutation de liaison double ou multiple ; et

l'envoi, par l'UE, d'informations sur une liaison montante UL sur la base des premières informations comprend :

l'envoi, par l'UE, des informations à la première station de base sur la liaison montante UL sur la base des premières informations.

**9.** Procédé selon la revendication 7 ou 8, dans lequel la réception, par l'UE, de premières informations envoyées par une station de base dans une cellule cible comprend :

la réception, par l'UE, des premières informations qui sont envoyées par la station de base à l'UE sur la base de secondes informations.

**10.** Procédé selon la revendication 9, dans lequel la réception, par l'UE, des premières informations qui sont envoyées par la station de base à l'UE sur la base de secondes informations comprend :

la recherche (406), par l'UE au moyen d'un premier identifiant de transmission de réseau radio, d'un espace de recherche prédéfini pour les premières informations qui sont envoyées par la station de base sur la base des secondes informations.

**11.** Procédé selon la revendication 9, dans lequel l'espace de recherche correspondant à chaque premier identifiant de transmission de réseau radio est différent, et/ou l'espace de recherche correspondant à chaque premier identifiant de transmission de réseau radio est distribué.

**12.** Procédé selon la revendication 8, dans lequel l'envoi, par l'UE, d'informations sur une liaison montante UL sur la base des premières informations comprend :

l'envoi, par l'UE, d'un message message 3 à la première station de base sur la liaison montante UL sur la base des premières informations, dans lequel le message 3 est brouillé (407) par un premier identifiant de transmission de réseau radio, RNTI.

**13.** Procédé selon l'une quelconque des revendications 7 à 12, dans lequel la réception, par l'UE, de premières informations envoyées par une station de base dans une cellule cible comprend :

la réception, par l'UE, des premières informations qui sont envoyées par la station de base dans la cellule cible au moyen de l'une quelconque des instructions suivantes : une instruction de transfert, une instruction de commande de transfert, une instruction de reconfiguration RRC et une instruction d'ajout ou de commutation de liaison double ou multiple.

UE 102

...

UE 102

UE 102

Base station
101

FIG. 1

UE 102

...

UE 102

UE 102

First base
station 101-1

Second base
station 101-2

FIG. 2

101

201                  203

| Processor | | Transceiver |

202

Memory

Application
program and
configuration file

204

FIG. 3

102

301

Processor

303

304

Memory

Application
program and
configuration file

302

Transceiver

FIG. 4

FIG. 5

A base station configures, in a target cell, a first channel for UE, and sends configuration information of the first channel to the UE — 401

↓

The UE receives the configuration information of the first channel — 402

↓

The UE sends second information on the first channel, where the second information is an uplink scheduling request — 403

↓

The base station receives the second information sent by the UE on the first channel, where the second information is the scheduling request — 404

↓

The base station detects the second information, and sends first information to the UE based on the second information — 405

↓

The UE searches, by using a first radio network transmission identifier, predefined search space for the first information that is sent by the base station based on the second information — 406

↓

The UE sends a message message 3 to the base station, where the message 3 is scrambled by an uplink scheduling request–radio network transmission identifier SR-RNTI — 407

↓

The base station receives the message message 3 sent by the UE — 408

↓

The base station sends a message 4 to the UE, where the message 4 is used to indicate to the UE that contention resolution succeeds — 409

↓

The UE receives the message 4 sent by the base station — 410

FIG. 6

A base station sends, in a target cell, first information to UE, where the first information is an uplink grant UL grant message — 501

The UE receives the first information sent by the base station in the target cell, where the first information is the uplink grant message — 502

The UE sends information on an uplink UL based on the first information — 503

FIG. 7

Base station

Communications unit 71

Detection unit 72

Configuration unit 73

FIG. 8

UE

Communications unit 81

Synchronization unit 82

FIG. 9

## REFERENCES CITED IN THE DESCRIPTION

### Patent documents cited in the description

- EP 2448329 A1

- US 2015305065 A1

### Non-patent literature cited in the description

- **QUALCOMM INCORPORATED.** Further details of RACH-less handover SGPP DRAFT, R2-164239_RACHLESS_HANDOVER, SRD GENERATION PARTNERSHIP PROJECT (SGPP). MOBILE COMPETENCE CENTRE, 22 May 2016